# FASCICULE DE BREVET EUROPEEN

(11) **EP 4 466 517 B1**
(45) Date de publication et mention de la délivrance du brevet: **17.09.2025**
(21) Numéro de dépôt: 23701010.3
(22) Date de dépôt: 16.01.2023
(51) Int. Cl.: G01B 9/0209, G01M 11/02, G02B 27/62, G01B 11/06, G01B 11/27, G01M 11/08

(54) **PROCÉDÉ ET DISPOSITIF DE DÉTERMINATION D'INFORMATIONS GÉOMÉTRIQUES D'INTERFACES D'UN ÉLÉMENT OPTIQUE**
VERFAHREN UND VORRICHTUNG ZUR BESTIMMUNG GEOMETRISCHER INFORMATIONEN ÜBER SCHNITTSTELLEN EINES OPTISCHEN ELEMENTS
METHOD AND DEVICE FOR DETERMINING GEOMETRIC INFORMATION RELATING TO INTERFACES OF AN OPTICAL ELEMENT

(30) Priorité: 17.01.2022 FR 2200358
(43) Date de publication de la demande: 27.11.2024
(73) Titulaire: Fogale Nanotech, 30900 Nîmes (FR)
(72) Inventeur: PETITGRAND, Sylvain, 30132 CAISSARGUES (FR); LEGROS, Eric, 30900 NÎMES (FR)
(74) Mandataire: IPAZ
(86) Numéro de dépôt international: PCT/EP2023/050867
(87) Numéro de publication internationale: WO 2023/135295

(56) Documents cités:
- JP-A- 2001 147 174
- US-A1- 2012 133 924
- US-A1- 2015 192 769
- US-A1- 2016 047 712

## Description

### Domaine technique

La présente invention concerne un procédé de détermination d'une information géométrique d'interfaces dans un élément optique comprenant aux moins deux interfaces. Elle concerne également un dispositif de détermination d'une information géométrique d'interfaces dans un tel élément optique.

Le domaine de l'invention est, de manière non limitative, celui des systèmes de contrôle et de mesure optiques, notamment pour la fabrication d'éléments optiques.

### Etat de la technique

Les éléments optiques, tels que des assemblages optiques ou des objectifs d'imagerie, sont en général constitués d'une ou d'une pluralité de lentilles et éventuellement d'autres composants, comme des lames ou des filtres, destinés à mettre des faisceaux optiques en forme. Ces composants, ou ces lentilles, peuvent être assemblés sous forme d'empilement selon un axe dans un support tel qu'un barillet.

Chaque surface ou interface d'un élément optique peut être décrite par un axe optique, un sommet (apex) ou le centre de courbure de la surface. L'axe optique est un axe de symétrie de rotation dans une approximation de symétrie de révolution. L'axe optique peut être l'axe passant par l'apex et le centre de courbure d'une surface.

Les performances optiques d'un élément optique, par exemple un objectif d'imagerie, dépendent essentiellement de la précision de fabrication des composants optiques (tels que les lentilles) qui le composent, et de la précision avec laquelle ils sont positionnés dans l'assemblage. Lors de la fabrication des éléments optiques ou de la manipulation de leurs composants, il peut être nécessaire de mesurer et de contrôler l'alignement des composants par rapport à un axe de référence ou aux autres composants.

Des erreurs dites erreurs de centrage sont présentes lorsque l'axe optique d'une interface et l'axe de référence ou l'axe d'une autre interface ne coïncident pas, c'est-à-dire qu'ils sont différents en position et en direction.

Il peut également être nécessaire de mesurer des épaisseurs ou des positions des composants de l'élément optique, ou encore des distances entre eux. La précision des mesures de ces paramètres géométriques dépend des erreurs de centrage.

On connait des méthodes de mesure des erreurs de centrage. A titre d'exemple, l'alignement d'un faisceau optique de mesure, constituant un axe de référence, avec un axe optique global d'un élément optique mesuré est réalisé en propageant un faisceau optique d'alignement au travers des composants de l'élément optique, et en détectant le faisceau réfléchi sur un capteur optique de type CCD ou PSD. Le capteur permet d'indiquer le déplacement du faisceau réfléchi, celui-ci effectuant une trajectoire sur le capteur lorsque l'élément optique est mis en rotation autour d'un axe aligné avec celui du faisceau de mesure. La position de l'élément optique et son orientation angulaire par rapport au faisceau sont ainsi mesurées et peuvent être corrigées de sorte à minimiser l'extension de la trajectoire du faisceau réfléchi.

Cependant, pour des assemblages de plusieurs lentilles, quand deux interfaces sont proches ou que deux centres de courbure se trouvent être proches, le faisceau de mesure peut être réfléchi simultanément par ces deux interfaces pour un même point de focalisation sur la caméra. Ainsi, la trajectoire mesurée représente une superposition des deux signaux, menant ainsi à un résultat mélangé. Le pouvoir de discrimination est fixé par l'optique d'imagerie, c'est à dire sa profondeur de champ. Ce problème augmente avec la réduction de taille des objectifs, notamment pour les objets mobiles, tels que les smartphones.

En outre, la tête de mesure est en général déplacée suivant l'axe de mesure pour placer le point de focalisation du faisceau de mesure dans le voisinage de la surface à mesurer. Ces déplacements sont souvent associés à des variations de l'axe du faisceau de mesure autour de l'axe de référence du système de mesure (ces déplacements des moyens de déplacements de la tête de mesure étant appelés *tip, tilt,* et *yaw* selon la terminologie anglo-saxonne).

En conséquence, il est nécessaire de pouvoir distinguer les différentes interfaces d'un élément optique de manière fiable et efficace.

JP 2001 147174 A décrit un appareil de mesure d'interférences.

### Exposé de l'invention

Il est un but de l'invention de proposer un procédé et un dispositif de mesure, pour déterminer une information géométrique d'interfaces ou de surfaces d'un élément optique comprenant au moins deux interfaces, ce dispositif et ce procédé permettant des mesures améliorées d'interfaces dans un assemblage optique.

Un autre but de la présente invention est de proposer un procédé et un dispositif de mesure permettant l'évaluation et/ou la correction de décentrage avec un grand pouvoir de discrimination, même pour des interfaces très proches d'un élément optique.

Il est encore un but de la présente invention de proposer un procédé et un dispositif de mesure dont les mesures sont directement exploitables pour obtenir des paramètres géométriques des interfaces mesurées.

Au moins un de ces buts est atteint avec un procédé de mesure, pour déterminer une information géométrique d'une interface à mesurer d'un élément optique par rapport à un axe de mesure, l'élément optique comprenant au moins deux interfaces, le procédé étant mis en œuvre par un dispositif de mesure ayant un axe de référence et comprenant des moyens de mesure interférométriques avec au moins un capteur optique et au moins une source lumineuse à faible cohérence configurés pour diriger un faisceau de mesure selon l'axe de mesure vers l'élément optique de sorte à traverser au moins une des au moins deux interfaces et à être réfléchi par l'interface à mesurer et générer un faisceau de mesure réfléchi, et pour détecter sélectivement un signal d'interférence résultant d'interférences entre le faisceau de mesure réfléchi et un faisceau de référence, le dispositif comprenant en outre des moyens de positionnement et des moyens numériques de traitement,
le procédé comprenant les étapes suivantes :
- positionnement relatif, par les moyens de positionnement, d'une zone de cohérence de la source lumineuse au niveau d'une interface à mesurer ;
- au moins une première étape de mesure et une deuxième étape de mesure de l'interface par les moyens de mesure interférométriques, de sorte à produire une image d'interférence par étape de mesure à partir de signaux d'interférence respectifs ;
- rotation de l'élément optique autour de l'axe de référence entre les étapes de mesure ; et
- traitement, par les moyens numériques de traitement, des au moins deux images d'interférence, de sorte à obtenir une information relative de l'interface à mesurer.

Dans le cadre de la présente invention, un « élément optique » peut désigner tout type d'objet optique, destiné par exemple à être inséré dans un faisceau optique, à mettre en forme un faisceau optique, et/ou à réaliser une image. Il peut désigner par exemple :
- un composant optique unique tel qu'une lentille ou une lame ;
- un assemblage de lentilles et/ou d'autres composants optiques, tel qu'un objectif d'imagerie, de caméra, ou un dispositif de mise en forme d'un faisceau optique.

Un élément optique peut notamment être constitué de, ou comprendre, des éléments réfractifs tels que des lentilles. Ces composants, ou ces lentilles, peuvent notamment être assemblés dans un barillet, ce barillet pouvant aussi contenir d'autres éléments optiques tels que des espaceurs et/ou des lames, comme par exemples des filtres.

Une image d'interférence peut être une image de phase, une image d'amplitude ou encore une image de topographie. Le terme « image d'interférence » désigne ainsi un signal d'interférence, ou un ensemble de signaux d'interférence, traité et représenté en image.

Le procédé selon la présente invention permet d'effectuer des mesures d'interfaces d'un élément optique, et notamment d'interfaces empilées, pour en déduire une information relative à chaque interface mesurée. Ces interfaces peuvent par exemple comprendre des surfaces de lentilles.

Les mesures peuvent être réalisées avec un faisceau de mesure d'un capteur interférométrique illuminé par une source lumineuse à faible cohérence. Le faisceau de mesure définit l'axe de mesure du dispositif de mesure. Une zone de cohérence de la source lumineuse est positionnée relativement au niveau d'au moins une interface à mesurer. L'interface à mesurer peut être une interface « enterrée », c'est-à-dire, l'une des interfaces à l'intérieur de l'élément optique. Pour arriver à une telle interface enterrée, le faisceau de mesure doit donc traverser d'autres interfaces de l'élément optique.

Par « zone de cohérence », on entend la zone dans laquelle des interférences entre le faisceau de mesure et un faisceau de référence peuvent se former sur le capteur optique. La zone de cohérence peut être déplacée en variant la différence de la longueur du chemin optique entre les deux faisceaux, par exemple en modifiant la longueur optique d'un des faisceaux ou des deux. Lorsque la zone de cohérence se trouve au niveau d'une interface, des signaux d'interférence entre le faisceau de mesure réfléchi par cette interface et le faisceau de référence peuvent être acquis, pour ainsi obtenir une image d'interférence.

Grâce à la rotation de l'élément optique, au moins deux images d'interférence sont acquises. Ces différentes images, pour une même interface, permettent d'observer les différences entre elles, afin d'en déduire une information relative à l'interface mesurée.

Le procédé selon l'invention permet d'obtenir sélectivement au moins deux images d'interférence pour chaque interface au niveau de laquelle la zone de cohérence est positionnée, c'est-à-dire pour chaque surface se trouvant dans la zone de cohérence. En effet, la longueur de cohérence de la source lumineuse est ajustée de sorte à être plus courte qu'une distance optique minimale entre deux interfaces adjacentes de l'élément optique. Ainsi, pour chaque mesure, une seule interface se trouve dans la zone de cohérence, et donc, un signal d'interférence acquis ne comprend que la contribution principalement d'une seule interface, ou ne provient que d'une seule interface. Les images d'interférence peuvent ainsi principalement ou uniquement être obtenues pour l'interface au niveau de laquelle la zone de cohérence est positionnée, permettant de parfaitement discriminer la contribution de l'interface mesurée.

Ainsi, grâce à l'exploitation des images d'interférence des différentes interfaces, deux interfaces d'un même élément optique, et notamment deux interfaces adjacentes peuvent être distinguées de manière sûre et fiable.

Les mesures des interférences sont effectuées selon un champ de vue déterminé par les moyens de mesure du dispositif. Les mesures sont de préférence réalisées en plein champ.

Selon un mode de réalisation, l'étape de traitement peut comprendre l'identification d'un même point d'intérêt dans chaque image d'interférence.

Ce point d'intérêt peut être un point caractéristique de l'interface, par exemple un point de hauteur maximum ou une forme caractéristique apparaissant d'une image à l'autre. Le point d'intérêt peut alors être suivi lors de la rotation entre deux étapes de mesure.

Selon l'invention, l'étape de traitement comprend une étape de détermination d'une information de décentrage de l'interface.

Cette étape permet de déterminer de décentrage, et notamment des erreurs d'alignement entre les axes optiques des interfaces et l'axe de mesure.

Grâce à l'exploitation des images d'interférence des différentes interfaces, aucune étape de mesure préalable ou supplémentaire, avec des moyens de mesure différents ou supplémentaires, doit être effectuée pour la détermination des erreurs de centrage. En effet, les images d'interférence peuvent être simultanément exploitées pour en déduire d'autres caractéristiques des interfaces mesurées, et notamment des paramètres géométriques de ces interfaces, et ce simultanément avec la détermination des erreurs de centrage.

Le procédé selon la présente invention permet de déterminer une information de décentrage des interfaces d'un élément optique de manière fiable et précise, et ce pour chaque interface indépendamment.

Le procédé selon l'invention comprend en outre une étape de correction du décentrage de l'interface.

Selon un exemple, l'étape de correction peut être réalisée par un déplacement de l'élément optique relativement au faisceau de mesure dans un plan perpendiculaire à l'axe de référence.

L'alignement du faisceau de mesure est ainsi ajusté par rapport à une interface à mesurer, par exemple lorsque le faisceau de mesure n'est pas centré sur l'apex de l'interface.

Alternativement ou en plus, l'étape de correction peut être réalisée par une rotation de l'élément optique dans un plan contenant l'axe de référence. Autrement dit, la rotation de l'élément optique est réalisée selon deux axes perpendiculaires à l'axe de référence.

L'alignement du faisceau de mesure est ainsi ajusté angulairement par rapport à une interface à mesurer, par exemple lorsque l'élément optique est incliné par rapport à l'axe de mesure.

Ces ajustements mécaniques permettent d'obtenir des mesures plus précises.

Selon un mode de réalisation, l'étape de traitement peut également comprendre une étape de correction numérique du décentrage de l'interface.

Les erreurs de centrage sont calculées à partir de l'analyse des images d'interférence. Les résultats de ces calculs peuvent alors être utilisés pour la rectification de mesures ultérieures.

Avantageusement, l'étape de traitement comprend en outre une étape d'obtention d'une information géométrique de l'interface à mesurer.

Les mesures permettent de déterminer, par exemple, des formes géométriques et des positionnements des interfaces,
Cette information géométrique peut concerner la forme optique et/ou la forme géométrique de l'interface à mesurer, et/ou des distances optiques, ou géométriques, représentatives de la forme et/ou de la position de l'interface.

L'information géométrique peut comprendre des paramètres géométriques de l'interface tels que :
- la position de l'apex, par rapport à un axe de l'élément optique, ou relativement à la position de l'apex d'une autre interface,
- le centre de courbure, par rapport à un axe de l'élément optique, ou relativement celui d'une autre interface,
- la forme optique du profil de l'interface, et/ou
- l'axe optique, représenté, par exemple, par une normale à l'interface au point d'apex, par rapport à un axe de l'élément optique.

Des paramètres géométriques peuvent également être définis pour chaque composant optique ou entre les composants optiques de l'élément optique. Il est par conséquent possible de définir les paramètres géométriques suivants :
- épaisseur d'un composant optique, c'est-à-dire la différence entre les positions des apex des interfaces déterminées par rapport à un axe de mesure,
- *« air-gap* » ou espace vide entre les apex de deux interfaces voisines mais de composants optiques différents. Ce paramètre peut être déterminé comme l'épaisseur.
- axes optiques et/ou inclinaisons des interfaces après empilement du composant optique, et/ou
- centrage des apex des interfaces après empilement.

Avantageusement, l'étape de détermination d'une information de décentrage peut comprendre en outre une étape de correction prenant en compte des effets de propagation optique subis par le faisceau de mesure en traversant des interfaces de l'élément optique.

En effet, lors de la mesure de surfaces ou interfaces « enterrées » dans l'élément optique, l'information de décentrage peut également dépendre des milieux et des paramètres géométriques des interfaces traversées par le faisceau de mesure avant d'atteindre ces surfaces enterrées, notamment dû à des modifications de fronts d'ondes par des sauts d'indice de réfraction et différentes courbures des interfaces traversées, et éventuellement des aberrations introduites. Dans ce cas, une correction doit être appliquée pour déterminer l'information de décentrage réelle des interfaces.

Pour effectuer cette correction, il est possible d'utiliser un modèle de propagation de la lumière et des connaissances a priori ou acquises lors de mesures précédentes sur l'élément optique, telles que des indices de réfraction de matériaux et des positions et des formes d'interfaces traversées.

Au moins l'étape de positionnement de la zone de cohérence, les étapes de mesure et l'au moins une étape de rotation sont mises en œuvre de manière séquentielle pour la détermination de l'information relative à différentes interfaces à mesurer.

Ainsi, l'ensemble des interfaces d'un élément optique peuvent être mesurées, par exemple, en commençant par l'interface supérieure et en terminant par l'interface inférieure, en passant par toutes les interfaces intermédiaires « enterrées », sans qu'il soit nécessaire de retourner ou manipuler l'élément optique.

Le traitement des images d'interférence acquises pour les interfaces successives peut être réalisé séquentiellement, entre des mesures sur les différentes interfaces, ou une fois toutes les images d'interférence, pour toutes les interfaces, acquises.

Suivant un autre aspect de l'invention, il est proposé un dispositif de mesure, pour déterminer une information géométrique d'une interface à mesurer d'un élément optique par rapport à un axe de mesure, l'élément optique comprenant au moins deux interfaces, le dispositif ayant un axe de référence et comprenant :
- des moyens de mesure interférométriques comprenant au moins une source de lumière à faible cohérence et au moins un capteur optique, configurés pour :
   ∘ former au moins un faisceau de mesure et au moins un faisceau de référence,
   ∘ diriger le faisceau de mesure selon l'axe de mesure vers l'élément optique de sorte à traverser au moins une des au moins deux interfaces et à être réfléchi par l'interface à mesurer et générer un faisceau de mesure réfléchi,
   ∘ détecter sélectivement une pluralité de signaux d'interférence résultant d'interférences entre le faisceau de mesure réfléchi et le faisceau de référence pour une pluralité de points de mesure sur l'interface, pour produire une image d'interférence ;
- des moyens de positionnement configurés pour positionner relativement une zone de cohérence de la source lumineuse au niveau de l'interface à mesurer ;
- des moyens de déplacement angulaire configurés pour permettre une rotation de l'élément optique autour de l'axe de référence ; et
- des moyens numériques de traitement configurés pour déterminer une information relative à l'interface à partir d'au moins deux images d'interférence produites à différentes positions angulaires de l'élément optique.

Selon un mode de réalisation, les moyens de mesure interférométriques peuvent comprendre un capteur interférométrique, dit capteur interférométrique en plein champ, configuré pour détecter un signal d'interférence en plein champ dans le champ de vue.

L'interface à mesurer peut alors être imagée selon le champ de vue en une seule mesure.

Selon un exemple, le dispositif peut comprendre un capteur interférométrique avec un interféromètre de Michelson.

Selon un autre exemple, le dispositif peut comprendre un capteur interférométrique avec un interféromètre de Mach-Zehnder.

Le dispositif selon l'invention peut comprendre en outre des moyens de déplacement configurés pour déplacer l'élément optique relativement au faisceau de mesure dans un plan perpendiculaire à l'axe de référence.

Selon un mode de réalisation, les moyens de déplacement angulaire peuvent en outre être configurés pour permettre une rotation de l'élément optique dans un plan contenant l'axe de référence.

Les moyens de positionnement peuvent être configurés pour positionner la zone de cohérence successivement au niveau de différentes interfaces de l'élément optique.

Ceci permet l'acquisition et le traitement de signaux interférométriques pour chaque interface de manière séquentielle et séparée, afin d'obtenir des informations relatives à l'ensemble des interfaces de l'élément optique.

Le procédé et le dispositif selon l'invention peuvent être mis en œuvre, notamment, pour la mesure d'éléments optiques ou d'assemblages optiques lors de leur production, par exemple des objectifs formés de lentilles ou de microlentilles tels que des objectifs de smartphone ou pour l'industrie automobile.

Ils permettent notamment d'obtenir ou de construire des valeurs géométriques caractéristiques d'une grande précision pour des interfaces d'intérêt dans un élément optique, comparer des valeurs caractéristiques attendues et mesurées avec des valeurs seuils et ainsi valider ou rejeter un composant d'élément optique au cours du processus de production.

### Description des figures et modes de réalisation

D'autres avantages et caractéristiques apparaîtront à l'examen de la description détaillée d'exemples nullement limitatifs, et des dessins annexés sur lesquels :
- la Figure 1 est une représentation schématique d'une mise en œuvre d'un dispositif de mesure selon la présente invention ;
- la Figure 2 est une représentation schématique d'un exemple de réalisation non limitatif d'un dispositif de mesure pouvant être mis en œuvre dans le cadre de la présente invention ;
- la Figure 3 est une représentation schématique d'un exemple de réalisation non limitatif d'un procédé de mesure selon la présente invention ;
- la Figure 4 montre des exemples d'images d'interférence obtenues avec un procédé selon la présente invention ; et
- la Figure 5 montre des exemples de mesures obtenues avec le procédé selon la présente invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, ou avec seulement une partie des détails structurels si cette partie uniquement est suffisante pour conférer un avantage technique ou pour différencier l'invention par rapport à l'état de la technique antérieure.

En particulier toutes les variantes et tous les modes de réalisation décrits sont combinables entre eux si rien ne s'oppose à cette combinaison sur le plan technique.

Sur les figures, les éléments communs à plusieurs figures peuvent conserver la même référence.

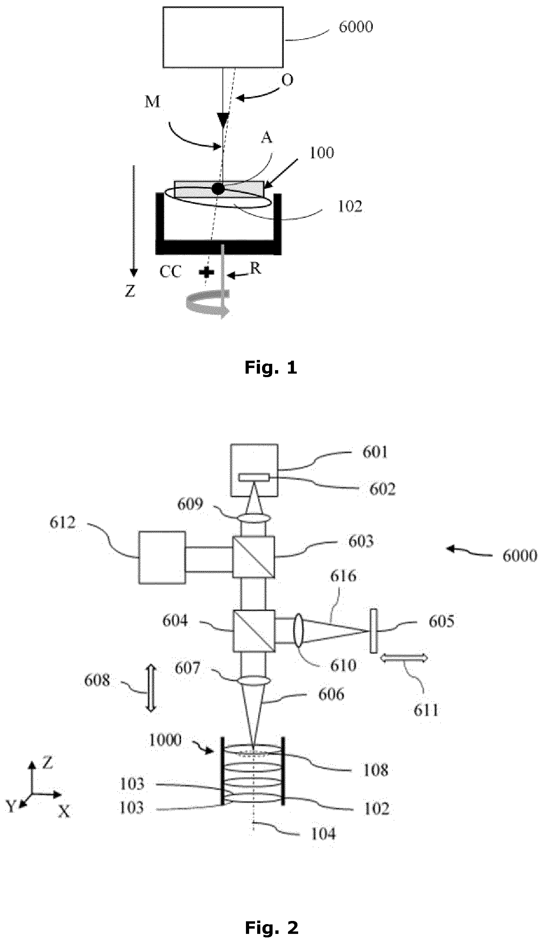

La Figure 1 est une représentation schématique permettant de visualiser le principe de la présente invention.

Un dispositif de mesure 6000 est agencé pour effectuer des mesures de paramètres géométriques d'une interface à mesurer d'un élément optique 1000, comprenant au moins deux interfaces, par rapport à un axe de mesure M.

Dans l'exemple représenté dans la Figure 1, l'élément optique 1000 est une lentille 102 agencée dans un barillet suivant un axe Z. Des paramètres géométriques de l'une des surfaces de la lentille sont représentés : l'apex A de la surface, le centre de courbure CC et un axe de symétrie, dit axe optique O. L'axe optique O est un axe de symétrie de révolution pour la surface considérée.

L'élément optique 1000 peut être mis en rotation autour d'un axe de référence R du dispositif de mesure 6000 par des moyens de déplacement angulaire. Par exemple, l'élément optique 1000 peut être placé sur une plateforme de rotation (non représentée), telle qu'une table tournante, afin de pouvoir faire pivoter l'élément optique 1000 autour de l'axe de rotation de la table tournante.

Le dispositif de mesure 6000 comprend un interféromètre avec au moins une source de lumière à faible cohérence et au moins un capteur optique. Un faisceau de mesure produit par la source de lumière est dirigé vers l'élément optique 1000 selon l'axe de mesure M, de sorte à traverser les interfaces de l'élément optique 1000. L'interféromètre est configuré pour produire un signal d'interférence provenant de l'interférence entre le faisceau de mesure réfléchi par l'interface à mesurer et un faisceau de référence. Le signal d'interférence est détecté par le capteur. Ce signal d'interférence contient une mesure de topographie de l'interface de laquelle le faisceau ce mesure est réfléchi, et donc des informations géométriques et de centrage de celle-ci. Un ou plusieurs signaux d'interférence sont ainsi acquis selon un champ de vue sur l'interface.

Le dispositif 6000 selon l'invention comprend également des moyens de positionnement pour positionner relativement une zone de cohérence 100 de l'interféromètre au niveau de l'interface à mesurer de l'élément optique 1000.

Le dispositif 6000 comprend en outre des moyens numériques de traitement configurés pour déterminer une information de décentrage de l'interface à partir des images d'interférence produites à différentes positions angulaires de l'élément optique. Les moyens de traitement comprennent au moins un ordinateur, une unité centrale ou de calcul, un microprocesseur, et/ou des moyens logiciels adaptés.

La Figure 2 est une représentation schématique d'un exemple de dispositif interférométrique pouvant être mis en œuvre dans le cadre de la présente invention.

Dans l'exemple représenté sur la Figure 2, l'élément optique 1000, de type objectif de caméra, est constitué d'un barillet ans lequel sont positionnées des lentilles 102. Les lentilles 102, alignées selon un axe optique 104, ont des surfaces ou des interfaces 103.

L'interféromètre 6000, représenté sur la Figure 2, est un interféromètre à faible cohérence plein champ.

Le dispositif 6000 est basé sur un interféromètre de Michelson ou de Linnik formé par un élément séparateur 604, sous la forme d'un cube ou d'une lame séparatrice, avec un bras de mesure qui dirige un faisceau de mesure 606 vers l'élément optique à mesurer 1000, et un bras de référence avec un miroir 605 pour former un faisceau de référence 616.

L'interféromètre 6000 est illuminé par une source 612 à faible cohérence par l'intermédiaire d'un élément séparateur d'éclairage 603 sous la forme d'un cube ou d'une lame séparatrice. La source 612 peut comprendre, par exemple, une diode superluminescente (SLD), une diode, une source de lumière thermique (lampe halogène, etc.) ou une source supercontinuum. La source 612 peut également comprendre un dispositif de filtrage, par exemple avec un réseau et une fente, ou des filtres interférentiels, pour ajuster la longueur de cohérence à quelques dizaines ou quelques centaines de microns. La source 612 peut être agencée pour émettre dans des longueurs d'ondes visibles ou proche infrarouge, autour d'une ou plusieurs longueurs d'ondes.

Bien entendu, les éléments séparateurs 603, 604 peuvent être non polarisants, ou polarisants et associés à des lames quart-d'onde pour faire des coupleurs sans pertes.

Les faisceaux de mesure 606 et de référence 616, réfléchis respectivement dans les deux bras de l'interféromètre, sont dirigés par l'intermédiaire de la lame séparatrice d'éclairage 603 vers une caméra 601 avec un capteur 602 comprenant une matrice de détection, par exemple de type CMOS ou CCD.

Lorsque la différence de trajets optiques entre les faisceaux de mesure 606 et de référence 616 est inférieure à la longueur de cohérence de la source 612, on obtient des interférences sur le détecteur 602.

Le dispositif 6000, tel que représenté sur la Figure 2, comprend également une lentille ou un objectif de focalisation 607, et une lentille de tube 609, agencées de sorte à définir un plan objet conjugué d'un plan image formé sur le capteur 602. Le bras de référence comprend en outre un objectif 610 qui définit également, avec la lentille de tube 609, un plan objet de référence conjugué du plan image du capteur 602.

Le dispositif 6000 est un dispositif imageur plein champ, qui permet d'imager des interfaces 103 de l'élément optique 1000 selon un champ de vue 108 qui est déterminé par le champ de vue du système d'imagerie et par son ouverture numérique au niveau de l'objectif de focalisation 607. En effet, pour obtenir une mesure, il faut que la réflexion spéculaire du faisceau de mesure 606 sur les interfaces 103 soit recouplée dans le système d'imagerie.

De manière habituelle, le dispositif 6000 comprend des éléments optiques pour focaliser le faisceau d'illumination dans le plan focal arrière de l'objectif de focalisation 607 et de l'objectif 610 du bras de référence. Les faisceaux d'illumination ne sont pas représentés sur la figure pour des raisons de clarté.

Le dispositif 6000 comprend également un premier moyen de positionnement ou de déplacement 611 pour faire varier la longueur du bras de référence, par exemple sous la forme d'une platine de translation 611 déplaçant le miroir de référence 605. L'objectif 610 du bras de référence peut également être ajustable pour maintenir le miroir de référence 605 dans un plan objet conjugué du plan image formé par le capteur 602.

Le dispositif 6000 comprend également un deuxième moyen de déplacement 608 dont la fonction est de déplacer le plan objet conjugué du plan image formé par le capteur 602, de sorte par exemple à imager séquentiellement les interfaces 103 successives sur le capteur 602. Ce moyen de déplacement 608 peut comprendre un système pour déplacer l'objectif de focalisation 607 ou des lentilles de cet objectif, par exemple avec un dispositif de translation linéaire ou hélicoïdal. Alternativement ou en plus, ce moyen de déplacement 608 peut comprendre un dispositif ou une platine de translation pour déplacer le dispositif 6000 relativement à l'élément optique 1000, ou inversement.

Le dispositif 6000 comprend en outre des moyens de déplacement transversaux (non représenté) pour déplacer l'élément optique 1000 relativement au faisceau de mesure 606 dans le plan X-Y, ainsi que des moyens de déplacement angulaire (non représentés) permettant la rotation de l'élément optique 1000 autour de l'axe de référence R, tel que décrits en référence à la Figure 1.

Avec le dispositif de mesure 6000, lorsqu'une surface ou une interface 103 d'un élément optique 1000 apparaît dans la zone de cohérence, on obtient sur le capteur une structure d'interférences résultant des interférences entre faisceaux de mesure 606 et de référence 616 pour le champ de vue 108. Des informations géométriques des interfaces peuvent être déduites de ces structures d'interférences.

Le dispositif selon l'invention, mettant par exemple en œuvre un interféromètre selon le mode de réalisation représenté sur la Figure 2, peut être utilisé pour mettre en œuvre les étapes du procédé selon l'invention qui seront décrites par la suite.

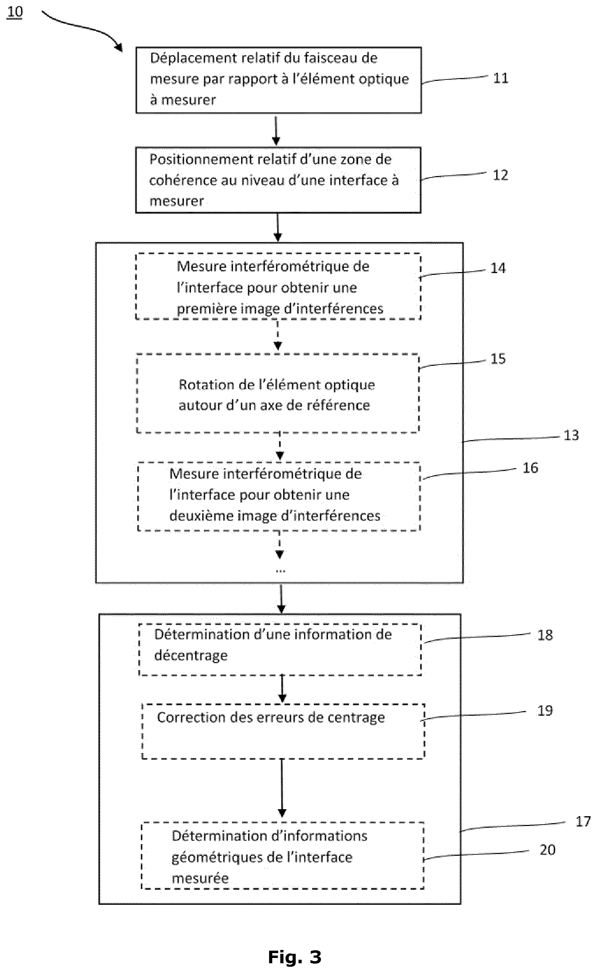

La Figure 3 est une représentation schématique d'un exemple de réalisation non limitatif d'un procédé de mesure selon l'invention.

Le procédé 10, représenté sur la Figure 3, comprend une étape 11 de déplacement relatif du faisceau de mesure 606 par rapport à l'élément optique 1000 à mesurer. Cette étape 11 permet de faire coïncider l'axe optique O de l'interface à mesurer 103 avec l'axe de mesure M du dispositif de mesure 6000, l'axe de mesure M étant matérialisé par le faisceau de mesure. Ce déplacement relatif peut être réalisé par les moyens de déplacement transversaux du dispositif 6000.

L'étape 11 de déplacement relatif du faisceau de mesure 606 peut être effectuée préalablement aux mesures de décentrage et éventuellement d'informations géométriques.

Cette étape 11 peut également être réalisée après avoir déterminé une erreur de centrage en mettant en œuvre le procédé 10 selon la présente invention, pour corriger cette erreur de centrage de l'interface à mesurer 103 et réitérer les étapes suivantes du procédé 10.

Lors d'une étape 12 du procédé 10, une zone de cohérence est positionnée relativement au niveau d'une interface à mesurer 103 de l'élément optique 1000.

Si la profondeur de champ de l'objectif de focalisation 607 est suffisante pour obtenir un signal de toutes les interfaces 103 de l'élément à mesurer, en modifiant la longueur optique du bras de référence, par exemple en déplaçant le miroir de référence 605, on déplace la zone de cohérence dans laquelle des interférences entre faisceaux de mesure 606 et de référence 616 peuvent se former sur le capteur 602. Lorsque cette zone de cohérence traverse une interface 103, on peut acquérir des signaux d'interférences en tous points du champ de vue mesurable 108.

Le procédé 10 peut également comprendre une étape (non représentée) de positionnement relatif d'un plan objet conjugué du plan image sur le capteur 602 au niveau de l'interface à mesurer 103.

En effet, il est préférable de positionner l'interface 103 à mesurer dans un plan objet conjugué du plan image situé sur le capteur 602, en variant la distance de focalisation du faisceau de mesure 606 de sorte à ce que le faisceau de mesure soit focalisé sur l'interface considérée. Cela permet d'optimiser la puissance recouplée dans le système d'imagerie et de mesurer l'interface selon un champ de vue 108 avec des pentes locales plus importantes, grâce à une meilleure exploitation de l'ouverture numérique de l'objectif de focalisation 607.

Le déplacement de la zone de cohérence peut être effectué, par exemple, en déplaçant le miroir de référence 605.

Le déplacement du plan objet, pour le positionner sur les interfaces successives, est effectué, par exemple, en variant la distance Z entre l'objectif de focalisation 607 et l'élément optique à mesurer 1000, et/ou en variant la distance de focalisation de l'objectif de focalisation 607 ou d'autres éléments optiques insérés dans le faisceau de mesure 606. La détection de la distance de focalisation optimale peut être effectuée en se basant, par exemple, sur un critère de maximum de puissance recouplée, ou de maximum de contraste d'image ou de franges d'interférences.

Les deux déplacements, de la zone de cohérence et du plan objet, doivent donc être effectués de manière coordonnée, le cas échéant, de sorte à superposer la zone de cohérence au plan objet considéré.

Lors d'une phase 13 d'acquisition d'images du procédé 10, des images d'interférence sont produites pour différentes positions angulaires de l'interface à mesurer 103.

Lors d'une première étape de 14 de mesure, un signal d'interférence est acquis de l'interface à mesurer 103 pour une première position angulaire de l'élément optique 1000.

Ensuite, lors d'une étape 15 de rotation, l'élément optique 1000 est déplacé angulairement autour de l'axe de référence du dispositif de mesure mis en œuvre. La mise en rotation peut être effectuée, par exemple, avec une table tournante sur laquelle l'élément optique est posé. La zone de cohérence est alors déplacée d'une première à une deuxième position sur l'interface à mesurer. La rotation peut être continue ou intermittente.

Lors d'une deuxième étape de 16 de mesure, un autre signal d'interférence est acquis de l'interface à mesurer 103 pour cette deuxième position angulaire de l'élément optique 1000.

Lorsque les mesures sont effectuées avec un interféromètre plein champ, tel qu'illustré sur la Figure 2, on obtient directement sur le capteur optique des structures d'interférences en plein champ résultant des interférences entre le faisceau de mesure et le faisceau de référence pour tout le champ de vue 108.

A partir de chaque signal d'interférence, une image d'interférence est produite. Une image d'interférence peut ainsi être obtenue pour différents angles de rotation de l'interface positionnée dans la zone de cohérence. L'image d'interférence peut être une image de phase, une image d'amplitude ou encore une image de topographie. Différentes méthodes connues peuvent être utilisées pour obtenir une image d'interférence à partir du signal d'interférence, tels que des méthodes profilométriques ou d'holographie numérique.

Les étapes de mesure et de rotation de l'élément optique sont réitérées autant de fois que souhaité ou nécessaire. De préférence, au moins trois images d'interférence sont acquises pour trois positions angulaires de l'élément optique 1000. En effet, pour un même point de mesure sur l'interface mesurée, le signal d'interférence correspondant sur le capteur optique effectue une trajectoire circulaire lorsque l'élément optique est mis en rotation. La trajectoire peut être définie par le cercle circonscrit au triangle formé par trois points, donc trois signaux d'interférence correspondant à un point de mesure pour trois positions angulaires différentes de l'élément optique.

A titre d'exemple, entre trois et environ 30 images d'interférence par interface peuvent être acquises.

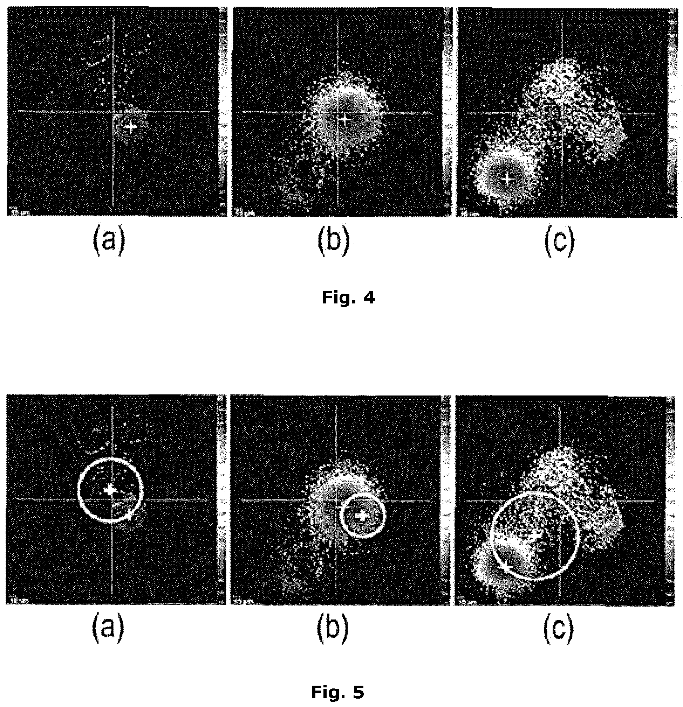

La Figure 4 montre des exemples d'images de topographie obtenues par microscopie holographique numérique (« *Digital Holography Microscopy »,* DHM). Les images (a), (b) et (c) représentent trois interfaces placées l'une sous l'autre dans un objectif optique, l'interface imagée dans l'image (a) étant l'interface supérieure. Un sommet de chaque interface est identifié et représenté par une croix pour chaque image. Les sommets correspondent à des points de hauteur maximum, et leurs coordonnées sont obtenues dans le référentiel du capteur optique.

Le centre de chaque image est représenté par l'intersection d'un axe vertical et d'un axe horizontal, respectivement.

Dans l'exemple de la Figure 4, il apparait que les interfaces présentent des erreurs de centrage, c'est-à-dire que l'axe optique d'une interface et l'axe de référence du dispositif de mesure et/ou l'axe d'une autre interface sont différents en position et en direction. En effet, les sommets des interfaces apparaissent décentrés sur les images. Dans une situation d'alignement parfait des axes, le sommet des interfaces doit être aligné sur le point d'intersection indiqué au centre de chaque image. Pour la mise en œuvre des mesures représentées sur la Figure 4, l'axe de référence R est aligné sur ce point d'intersection.

Lors d'une phase 17 de traitement, les images d'interférence acquises sont analysées pour chaque interface mesurée.

La phase 17 de traitement comprend une étape 18 de détermination d'une information de décentrage pour l'interface considérée.

Selon un exemple de mise en œuvre, cette étape 18 de détermination peut être réalisée en identifiant un même point d'intérêt dans chaque image d'interférence de l'interface. Ce point d'intérêt est un point caractéristique, comme par exemple un point de hauteur maximum ou une forme caractéristique apparaissant d'une image d'interférence à l'autre. Ce point d'intérêt est alors suivi dans toutes les images correspondant à différents angles de rotation de l'élément optique autour de l'axe de référence R.

La Figure 5 montre un exemple de mise en œuvre de l'étape 18 pour la détermination de l'inclinaison de l'axe optique de l'interface et le décentrement de l'axe de mesure par rapport à l'interface mesurée.

La Figure 5 montre les exemples d'images de topographie de la Figure 4 représentant trois interfaces placées l'une sous l'autre, dans lesquelles le déplacement des sommets lors de la rotation de l'élément optique, c'est-à-dire l'ensemble de ses déplacements angulaires, est indiqué par des cercles.

Il est à noter que le point de plus grande hauteur d'une interface ne correspond pas nécessairement à son apex. En effet, lorsque l'interface est inclinée par rapport à l'axe de mesure (par exemple une lentille inclinée), le sommet de l'interface peut s'abaisser pour laisser place à un nouveau point de hauteur maximum. Cette déviation engendre des erreurs de précision sur la mesure des positions des apex.

Les cercles visualisent les erreurs d'alignement entre l'axe optique O de chaque interface par rapport à l'axe de mesure M.

Pour l'interface supérieure représentée dans la Figure 5(a), le centre du cercle correspond à l'intersection de l'axe de rotation R avec cette interface supérieure, et le rayon du cercle correspond au décentrage du point de hauteur maximale de cette interface par rapport à cet axe R.

Pour les interfaces enterrées représentées sur les Figures 5(b) et (c), c'est-à-dire les interfaces qui sont « vues » par le faisceau de mesure 606 au travers d'autres interfaces optiques, les paramètres du cercle obtenu incluent les déplacements du faisceau de mesure dus aux erreurs de décentrement des interfaces précédentes, de même pour le rayon du cercle. L'interprétation des paramètres des cercles doit donc tenir compte de la propagation du faisceau de mesure jusqu'à et à partir de l'interface mesurée.

Selon un autre exemple de mise en œuvre de l'étape 18 de détermination d'une information de décentrage, un éventuel désalignement entre le faisceau de mesure et l'axe de référence du dispositif de mesure peut être identifié et déterminé. En effet, pour déplacer le plan objet sur les interfaces successives, la distance entre l'objectif de focalisation 607 et l'élément optique à mesurer 1000 peut être variée en déplaçant l'un ou l'autre selon la direction Z. Cette translation peut introduire des erreurs d'alignement, et le faisceau de mesure 606 peut ne plus coïncider avec l'axe de référence R du dispositif de mesure 6000.

Il en résulte que les centres des cercles tels que décrits précédemment ne correspondent plus à l'axe de rotation O de l'élément optique 1000. Ainsi, pour chaque interface 103, un centre de cercle différent est obtenu par acquisition des images d'interférence selon les différents angles de rotation. La position de l'origine du cercle dépend de l'erreur de centrage apporté par le déplacement relatif entre l'objectif de focalisation 607 du dispositif de mesure 6000 et l'élément optique 1000. La connaissance des positions relatives des origines des cercles permet d'obtenir des informations sur ces erreurs de centrage.

Dans le mode de réalisation du procédé 10 représenté dans la Figure 3, l'étape 18 de détermination d'une information de décentrage est réalisée après la phase 13 d'acquisition d'images. Selon un autre mode de réalisation, l'étape de détermination d'une information de décentrage peut également être réalisée simultanément avec la phase d'acquisition d'images. En effet, chaque image d'interférence peut être analysée directement après son obtention.

Selon le mode de réalisation du procédé 10 représenté sur la Figure 3, la phase 17 de traitement comprend en outre une étape 19 de correction des erreurs de centrage déterminées à l'étape précédente 18. Cette étape 19 de correction vise à faire coïncider l'axe optique O de l'interface considérée avec l'axe de mesure M.

Selon un mode de réalisation, l'étape 19 de correction peut être réalisée numériquement.

Les erreurs de centrage sont calculées à partir de l'analyse des images d'interférence, comme décrit ci-dessus pour l'étape 18 du procédé 10.

En référence à l'exemple présenté dans la Figure 5, les centres des cercles peuvent être référencés par rapport à un point de référence sur le capteur optique (par exemple son centre) ou relativement au centre d'un cercle d'une autre surface. Les diamètres des cercles peuvent aussi être évalués avec des méthodes connues, en tenant compte des distances et des alignements relatifs entre les éléments du dispositif de mesure et, si nécessaire, de la propagation du faisceau de mesure et du faisceau réfléchi au travers des interfaces en amont de l'interface mesurée.

Les erreurs de centrage peuvent ainsi être calculées et utilisées pour corriger des valeurs mesurées, telles que des informations géométriques de l'interface considérée, ou de les placer dans un référentiel commun pour pouvoir les comparer ou les manipuler avec ceux d'autres interfaces mesurées de l'élément optique.

Selon un mode de réalisation, le procédé selon l'invention peut en outre comprendre une étape de correction des erreurs de centrage réalisée mécaniquement. Cette étape peut être réalisée alternativement ou en plus de l'étape 19 de correction numérique décrite ci-dessus. Dans le mode de réalisation du procédé 10 représenté sur la Figure 3, l'étape de correction mécanique est visualisée par l'étape 11 de déplacement relatif du faisceau de mesure par rapport à l'axe optique de l'interface à mesurer. En effet, l'étape de correction mécanique à notamment d'intérêt pour réitérer les étapes du procédé, dans l'objectif de déterminer des informations géométriques d'interfaces de la manière la plus précise possible.

Selon un exemple, l'élément optique 1000 peut être déplacé relativement au faisceau de mesure 606 dans un plan perpendiculaire à l'axe de référence R. L'alignement du faisceau de mesure 606 est ainsi ajusté par rapport à une interface à mesurer, par exemple lorsque le faisceau de mesure n'est pas centré sur l'apex de l'interface.

Selon un autre exemple, l'étape 19 de correction peut être réalisée par une rotation de l'élément optique 1000 dans un plan contenant l'axe de référence R. L'alignement du faisceau de mesure 606 est ainsi ajusté angulairement par rapport à une interface à mesurer, par exemple lorsque l'élément optique est incliné par rapport à l'axe de mesure.

Bien entendu, ces déplacements de translation et de rotation peuvent également être réalisés cumulativement.

En référence à l'exemple présenté dans la Figure 5, chaque cercle peut être centré par translation de l'élément optique 1000 dans le plan perpendiculaire à l'axe de référence R, et par rotation dans un plan passant par cet axe de référence R pour que son centre coïncide avec ou s'approche d'un point de référence de l'image. Ce point de référence de l'image peut correspondre à une moyenne des intersections de l'axe de rotation R avec les différentes zones de cohérence du faisceau déplacées par les moyens de positionnement. Ainsi, il est préférable d'aligner l'axe de référence R avec l'axe M du faisceau de mesure 606 afin que ces intersections de l'axe de rotation R avec les différentes zones de cohérence du faisceau de mesure ne fassent directement qu'un seul point.

Toujours en référence à l'exemple présenté dans la Figure 5, le diamètre de chaque cercle peut être réduit par rotation de l'élément optique 1000 selon un plan perpendiculaire à l'axe de référence R de façon à ce que l'axe optique O de l'interface considérée et l'axe de référence R soient alignés suivant la même direction et rapprochés par translation pour être, de préférence, confondus.

Lorsque tous les points de hauteur maximum des images d'interférence se superposent au centre ou suffisamment proche du centre du capteur optique, le sommet ou apex de l'interface a été identifié. La hauteur du sommet peut alors être obtenue avec précision dans un référentiel du dispositif de mesure.

Ainsi idéalement, le dispositif de mesure est aligné préalablement à des mesures de l'élément optique, notamment pour en déterminer des informations géométriques, de façon à ce que l'axe de mesure M coïncide avec l'axe de rotation de l'élément optique.

Selon un exemple, le faisceau ainsi réfléchi par une interface plane de référence peut être détectée par le capteur optique, celui-ci pouvant être ajusté relativement pour placer le faisceau réfléchi centré sur le capteur.

Selon un autre exemple, une bille transparente peut être utilisée pour effectuer cet alignement préalable. La bille est translatée sur une table de rotation pour minimiser le rayon du cercle obtenu en point du haut de la bille (dit H). Ensuite, l'axe de mesure M est alignée par rotation pour que le rayon du cercle (lors de la rotation) décrit par le point bas B, vu à travers la bille s'annule. Préférentiellement, et si cela est nécessaire, l'objectif de focalisation du dispositif peut également être translaté pour ramener les points H et B vers le centre de l'image afin de garder une zone d'observation la plus grande possible pour les cercles d'interfaces à mesurer. Le point H peut être mémorisé comme centre du dispositif de mesure pour les prochaines étapes de rotation et translation de l'élément optique 1000.

Selon le mode de réalisation du procédé 10 représenté sur la Figure 3, la phase 17 de traitement comprend une étape 20 de détermination d'informations géométriques de l'interface mesurée. Cette étape 20 de détermination est réalisée en utilisant la correction des erreurs de centrage effectuée à l'étape 19 précédente. Lors de cette étape 20, l'ensemble ou un sous-ensemble des images d'interférence pour une interface à mesurer sont traités numériquement afin d'en déduire des informations géométriques de cette interface.

A partir d'images d'interférence, des informations de position (ou topographie) peuvent être obtenues. Une mesure caractéristique désignant la position brute pour chaque interface est produite.

Selon un exemple, cette mesure caractéristique peut être la position relative de l'interface mesurée. La position relative peut être indiquée, par exemple, par les positions de moteurs de positionnement ou de déplacement relatif de l'interface par rapport à l'objectif de focalisation, dans les trois directions X, Y et Z.

Selon un deuxième exemple, la mesure caractéristique peut être l'amplitude des pics correspondant à des enveloppes d'interférogrammes obtenus pour l'ensemble des interfaces mesurées.

Pour le traitement numérique des signaux d'interférence obtenus sur le capteur optique, des méthodes connues peuvent être mises en œuvre, telles que des algorithmes basés sur l'interférométrie par décalage de phase (*« phase stepping interferometry »* en anglais, PSI) ou par balayage vertical (« *vertical scan interferometry »* en anglais, VSI), ou par holographie numérique (« digital holography microscopy » en anglais, DHM).

L'étape 20 de détermination fournit ainsi un ensemble d'informations géométriques sur les interfaces mesurées :
- des coordonnées dans le référentiel du dispositif de mesure, ces coordonnées pouvant comprendre, pour chaque interface, les positions de points d'intérêt tels que les apex, sommets, vallées, etc.,
- des positions relatives par comparaison des coordonnées des points d'intérêt appartenant à différentes interfaces,
- des distances entre apex.

Selon un mode de réalisation non limitatif (non représenté), la phase 17 de traitement du procédé selon l'invention peut comprendre une étape de correction pour tenir compte des milieux traversés par le faisceau de mesure. Cette correction peut être appliquée sur les distances et positions optiques ou géométriques obtenues précédemment.

Selon un premier exemple, cette étape de correction peut être réalisée par l'utilisation de modèles de propagation des ondes électromagnétiques au travers des différents matériaux et interfaces jusqu'à l'interface considérée, incluant tous les composants optiques du dispositif de mesure et les interfaces de l'élément optique à mesurer 1000 traversées.

Selon un deuxième exemple, l'étape de correction peut être réalisée en calculant une fonction d'étalement du point (« *Point Spread Function »* en Anglais, PSF) ou une fonction de transfert optique (dans le domaine de Fourier) du système optique traversé par le faisceau de mesure jusqu'à l'interface considérée, incluant tous les composants optiques du dispositif de mesure et les interfaces de l'élément optique à mesurer traversées.

L'étape de correction peut être également réalisée en utilisant des informations de conception sur l'élément optique, lorsqu'elles sont disponibles.

Avantageusement, l'étape de correction peut être mise en œuvre préalablement aux étapes 18, 19 et 20 de la phase 17 de traitement décrite ci-dessus, afin que ces étapes puissent être réalisées sur des données corrigées des effets de propagation optique.

Bien sûr, l'invention n'est pas limitée aux exemples qui viennent d'être décrits et de nombreux aménagements peuvent être apportés à ces exemples sans sortir du cadre de l'invention.

## Revendications

1. Procédé de mesure (10), pour déterminer une information géométrique d'une interface (103) à mesurer d'un élément optique (1000) par rapport à un axe de mesure (M), l'élément optique (1000) comprenant au moins deux interfaces, le procédé (10) étant mis en œuvre par un dispositif de mesure ayant un axe de référence (R) aligné avec l'axe de mesure (M) et comprenant des moyens de mesure interférométriques (6000) avec au moins un capteur optique (602) et au moins une source lumineuse (612) à faible cohérence configurés pour diriger un faisceau de mesure (606) selon l'axe de mesure (M) vers l'élément optique (1000) de sorte à traverser au moins une des au moins deux interfaces et à être réfléchi par l'interface (103) à mesurer et générer un faisceau de mesure réfléchi, et pour détecter sélectivement un signal d'interférence résultant d'interférences entre le faisceau de mesure réfléchi et un faisceau de référence (616), le dispositif comprenant en outre des moyens de positionnement (608, 611) et des moyens numériques de traitement, ledit procédé (10) comprenant les étapes suivantes :
- positionnement relatif (12), par les moyens de positionnement (608, 611), d'une zone de cohérence de la source lumineuse (612) au niveau d'une interface (103) à mesurer ;
- au moins une première étape de mesure (14) et une deuxième étape de mesure (16) de l'interface (103) par les moyens de mesure interférométriques, de sorte à produire une image d'interférence par étape de mesure à partir de signaux d'interférence respectifs ;
- rotation (15) de l'élément optique (1000) autour de l'axe de référence (R) entre les étapes de mesure (14, 16) ;
- traitement (17), par les moyens numériques de traitement, des au moins deux images d'interférence, de sorte à obtenir une information relative à l'interface (103), l'étape de traitement (17) comprenant une étape (18) de détermination d'une information de décentrage de l'interface (103), le décentrage correspondant à une erreur d'alignement entre un axe optique (O) de l'interface (103) à mesurer et l'axe de mesure (M) ; **caractérisé en ce que** ledit procédé (10) comprend les étapes suivantes:
- correction du décentrage de l'interface en faisant coïncider l'axe optique (O) de l'interface à mesurer avec l'axe de mesure (M) ; et
- réitération des étapes de positionnement relatif (12), de mesure (14, 16), de rotation (15) et de traitement (17) ;
l'étape de traitement (17) comprenant en outre une étape (20) d'obtention d'une information géométrique de l'interface à mesurer en utilisant la correction du décentrage.

2. Procédé (10) selon la revendication 1, **caractérisé en ce que** l'étape (17) de traitement comprend l'identification d'un même point d'intérêt dans chaque image d'interférence.

3. Procédé (10) selon la revendication 1 ou 2, **caractérisé en ce que** l'étape de correction est réalisée par un déplacement de l'élément optique (1000) relativement au faisceau de mesure dans un plan perpendiculaire à l'axe de référence (R).

4. Procédé (10) selon l'une quelconque des revendications précédentes, **caractérisé en ce que** l'étape de correction est réalisée par une rotation de l'élément optique (1000) dans un plan contenant l'axe de référence (R).

5. Procédé (10) selon l'une quelconque des revendications précédentes, **caractérisé en ce que** l'étape (17) de traitement comprend en outre une étape (19) de correction numérique du décentrage de l'interface.

6. Procédé (10) selon l'une quelconque des revendications précédentes, **caractérisé en ce que** l'étape (18) de détermination d'une information de décentrage comprend en outre une étape de correction de propagation prenant en compte des effets de propagation optique subis par le faisceau de mesure en traversant des interfaces de l'élément optique (1000).

7. Procédé (10) selon l'une quelconque des revendications précédentes, **caractérisée en ce qu'**au moins l'étape (12) de positionnement de la zone de cohérence, les étapes (14, 16) de mesure et l'au moins une étape (15) de rotation sont mises en œuvre de manière séquentielle pour la détermination de l'information relative à différentes interfaces à mesurer.

8. Procédé (10) selon l'une quelconque des revendications précédentes, **caractérisé en ce que** l'image d'interférence comprend l'une parmi une image de phase, une image d'amplitude et une image de topographie.

9. Dispositif de mesure, pour déterminer une information géométrique d'une interface (103) à mesurer d'un élément optique (1000) par rapport à un axe de mesure (M), l'élément optique (1000) comprenant au moins deux interfaces, le dispositif ayant un axe de référence (R) aligné avec l'axe de mesure (M) et comprenant :
- des moyens de mesure interférométriques (6000) comprenant au moins une source de lumière (612) à faible cohérence et au moins un capteur optique (602), configurés pour :
∘ former au moins un faisceau de mesure (606) et au moins un faisceau de référence (616),
∘ diriger le faisceau de mesure (606) selon l'axe de mesure (M) vers l'élément optique de sorte à traverser au moins une des au moins deux interfaces et à être réfléchi par l'interface (103) à mesurer et générer un faisceau de mesure réfléchi,
∘ détecter sélectivement une pluralité de signaux d'interférence résultant d'interférences entre le faisceau de mesure réfléchi et le faisceau de référence (616) pour une pluralité de points de mesure sur l'interface (103), pour produire une image d'interférence ;
- des moyens de positionnement (608, 611) configurés pour positionner relativement une zone de cohérence de la source lumineuse au niveau de l'interface (103) à mesurer ;
- des moyens de déplacement angulaire configurés pour permettre une rotation de l'élément optique (1000) autour de l'axe de référence (R) ;
- des moyens numériques de traitement configurés pour déterminer une information relative à l'interface (103) à partir d'au moins deux images d'interférence produites à différentes positions angulaires de l'élément optique (1000), les moyens numériques de traitement étant configurés pour déterminer une information de décentrage de l'interface (103), le décentrage correspondant à une erreur d'alignement entre un axe optique (O) de l'interface (103) à mesurer et l'axe de mesure (M) ; et
- des moyens pour corriger le décentrage de l'interface en faisant coïncider l'axe optique (O) de l'interface à mesurer avec l'axe de mesure (M) ;
le dispositif étant configuré pour réitérer le positionnement relatif, les mesures, la rotation et le traitement,
les moyens numériques de traitement étant configurés en outre pour obtenir une information géométrique de l'interface à mesurer en utilisant la correction du décentrage.

10. Dispositif selon la revendication 9, **caractérisé en ce que** les moyens de mesure interférométriques (6000) comprennent un capteur interférométrique, dit capteur interférométrique en plein champ, configuré pour détecter un signal d'interférence en plein champ dans le champ de vue.

11. Dispositif selon la revendication 9 ou 10, **caractérisé en ce qu'**il comprend en outre des moyens de déplacement configurés pour déplacer l'élément optique (1000) relativement au faisceau de mesure dans un plan perpendiculaire à l'axe de référence (R).

12. Dispositif selon l'une quelconque des revendications 9 à 11, **caractérisé en ce que** les moyens de déplacement angulaire sont en outre configurés pour permettre une rotation de l'élément optique (1000) dans un plan contenant l'axe de référence (R).

13. Dispositif selon l'une quelconque des revendications 9 à 12, **caractérisé en ce que** les moyens de positionnement (608, 611) sont configurés pour positionner la zone de cohérence successivement au niveau de différentes interfaces de l'élément optique.

## Patentansprüche

1. Messverfahren (10) zum Bestimmen einer geometrischen Information einer zu messenden Grenzfläche (103) eines optischen Elements (1000) relativ zu einer Messachse (M), wobei das optische Element (1000) mindestens zwei Grenzflächen umfasst, wobei das Verfahren (10) durch eine Messvorrichtung implementiert wird, die eine Referenzachse (R) besitzt, die an der Messachse (M) ausgerichtet ist, und interferometrische Messmittel (6000) umfasst mit mindestens einem optischen Sensor (602) und mindestens einer Lichtquelle (612) mit geringer Kohärenz, die zum Richten eines Messstrahls (606) entlang der Messachse (M) in Richtung des optischen Elements (1000) konfiguriert sind, um mindestens eine der mindestens zwei Grenzflächen zu durchlaufen und von der zu messenden Grenzfläche (103) reflektiert zu werden und einen reflektierten Messstrahl zu produzieren, und zum selektiven Erfassen eines Interferenzsignals, das aus Interferenzen zwischen dem reflektierten Messstrahl und einem Referenzstrahl (616) resultiert, wobei die Vorrichtung ferner Positionierungsmittel (608, 611) und digitale Verarbeitungsmittel umfasst, wobei das Verfahren (10) die folgenden Schritte umfasst:
- relatives Positionieren (12), durch die Positionierungsmittel (608, 611), einer Kohärenzzone der Lichtquelle (612) an einer zu messenden Grenzfläche (103);
- mindestens einen ersten Messschritt (14) und einen zweiten Messschritt (16) der Grenzfläche (103) durch die interferometrischen Messmittel, um aus jeweiligen Interferenzsignalen pro Messschritt ein Interferenzbild zu produzieren;
- Drehen (15) des optischen Elements (1000) um die Referenzachse (R) herum zwischen den Messschritten (14, 16);
- Verarbeiten (17), durch die digitalen Verarbeitungsmittel, der mindestens zwei Interferenzbilder, um Informationen relativ zu der Grenzfläche (103) zu erhalten, wobei der Verarbeitungsschritt (17) einen Schritt (18) zum Bestimmen einer Information über eine Dezentrierung der Grenzfläche (103) umfasst, wobei die Dezentrierung einem Ausrichtungsfehler zwischen einer optischen Achse (O) der zu messenden Grenzfläche (103) und der Messachse (M) entspricht; **dadurch gekennzeichnet, dass** das Verfahren (10) die folgenden Schritte umfasst:
- Korrigieren der Dezentrierung der Grenzfläche durch Abstimmen der optischen Achse (O) der zu messenden Grenzfläche auf die Messachse (M); und
- Wiederholen der Schritte des relativen Positionierens (12), Messens (14, 16), Drehens (15) und Verarbeitens (17);
wobei der Verarbeitungsschritt (17) ferner einen Schritt (20) zum Erhalten einer geometrischen Information der zu messenden Grenzfläche unter Verwendung der Dezentrierungskorrektur umfasst.

2. Verfahren (10) nach Anspruch 1, **dadurch gekennzeichnet, dass** der Verarbeitungsschritt (17) die Identifikation eines gleichen Punkts von Interesse in jedem Interferenzbild umfasst.

3. Verfahren (10) nach Anspruch 1 oder 2, **dadurch gekennzeichnet, dass** der Korrekturschritt durch eine Verschiebung des optischen Elements (1000) relativ zu dem Messstrahl in einer Ebene senkrecht zu der Referenzachse (R) durchgeführt wird.

4. Verfahren (10) nach einem der vorstehenden Ansprüche, **dadurch gekennzeichnet, dass** der Korrekturschritt durch eine Drehung des optischen Elements (1000) in einer Ebene durchgeführt wird, die die Referenzachse (R) enthält.

5. Verfahren (10) nach einem der vorstehenden Ansprüche, **dadurch gekennzeichnet, dass** der Verarbeitungsschritt (17) ferner einen Schritt (19) zum digitalen Korrigieren der Dezentrierung der Grenzfläche umfasst.

6. Verfahren (10) nach einem der vorstehenden Ansprüche, **dadurch gekennzeichnet, dass** der Schritt (18) zum Bestimmen einer Dezentrierungsinformation ferner einen Ausbreitungskorrekturschritt umfasst, der optische Ausbreitungseffekte berücksichtigt, denen der Messstrahl bei dem Durchlaufen von Grenzflächen des optischen Elements (1000) ausgesetzt ist.

7. Verfahren (10) nach einem der vorstehenden Ansprüche, **dadurch gekennzeichnet, dass** mindestens der Schritt (12) zum Positionieren der Kohärenzzone, die Messschritte (14, 16) und der mindestens eine Schritt (15) zum Drehen nacheinander implementiert werden für die Bestimmung der Information relativ zu den unterschiedlichen zu messenden Grenzflächen.

8. Verfahren (10) nach einem der vorstehenden Ansprüche, **dadurch gekennzeichnet, dass** das Interferenzbild entweder ein Phasenbild, ein Amplitudenbild oder ein Topographiebild umfasst.

9. Messvorrichtung zum Bestimmen einer geometrischen Information einer zu messenden Grenzfläche (103) eines optischen Elements (1000) relativ zu einer Messachse (M), wobei das optische Element (1000) mindestens zwei Grenzflächen umfasst, wobei die Vorrichtung eine Referenzachse (R) besitzt, die an der Messachse (M) ausgerichtet ist, und umfassend:
- interferometrische Messmittel (6000), die mindestens eine Lichtquelle mit geringer Kohärenz (612) und mindestens einen optischen Sensor (602) umfassen, die konfiguriert sind zum:
∘ Ausbilden mindestens eines Messstrahls (606) und mindestens eines Referenzstrahls (616),
∘ Richten des Messstrahls (606) entlang der Messachse (M) auf das optische Element, um mindestens eine der mindestens zwei Grenzflächen zu durchlaufen und von der zu messenden Grenzfläche (103) reflektiert zu werden und einen reflektierten Messstrahl zu produzieren,
∘ selektives Erfassen einer Vielzahl von Interferenzsignalen, die aus der Interferenz zwischen dem reflektierten Messstrahl und dem Referenzstrahl (616) für eine Vielzahl von Messpunkten auf der Grenzfläche (103) resultieren, zum Produzieren eines Interferenzbilds;
- Positionierungsmittel (608, 611), die zum relativen Positionieren einer Kohärenzzone der Lichtquelle an der zu messenden Grenzfläche (103) konfiguriert sind;
- Winkelverschiebungsmittel, die zum Ermöglichen einer Drehung des optischen Elements (1000) um die Referenzachse (R) herum konfiguriert sind;
- digitale Verarbeitungsmittel, die zum Bestimmen einer Information relativ zu der Grenzfläche (103) aus mindestens zwei Interferenzbildern konfiguriert sind, die bei unterschiedlichen Winkelpositionen des optischen Elements (1000) produziert werden, wobei die digitalen Verarbeitungsmittel zum Bestimmen einer Information über die Dezentrierung der Grenzfläche (103) konfiguriert sind, wobei die Dezentrierung einem Ausrichtungsfehler zwischen einer optischen Achse (O) der zu messenden Grenzfläche (103) und der Messachse (M) entspricht; und
- Mittel zum Korrigieren der Dezentrierung der Grenzfläche durch Abstimmen der optischen Achse (O) der zu messenden Grenzfläche auf die Messachse (M);
wobei die Vorrichtung zum Wiederholen der relativen Positionierung, der Messungen, der Drehung und der Verarbeitung konfiguriert ist,
wobei die digitalen Verarbeitungsmittel ferner zum Erhalten einer geometrischen Information der zu messenden Grenzfläche unter Verwendung der Dezentrierungskorrektur konfiguriert sind.

10. Vorrichtung nach Anspruch 9, **dadurch gekennzeichnet, dass** die interferometrischen Messmittel (6000) einen interferometrischen Sensor, genannt Vollfeldinterferometriesensor, umfassen, der zum Erfassen eines Vollfeldinterferenzsignals in dem Sichtfeld konfiguriert ist.

11. Vorrichtung nach Anspruch 9 oder 10, **dadurch gekennzeichnet, dass** sie ferner Verschiebungsmittel umfasst, die zum Verschieben des optischen Elements (1000) relativ zu dem Messstrahl in einer Ebene senkrecht zu der Referenzachse (R) konfiguriert sind.

12. Vorrichtung nach einem der Ansprüche 9 bis 11, **dadurch gekennzeichnet, dass** die Winkelverschiebungsmittel ferner zum Ermöglichen einer Drehung des optischen Elements (1000) in einer Ebene konfiguriert sind, die die Referenzachse (R) enthält.

13. Vorrichtung nach einem der Ansprüche 9 bis 12, **dadurch gekennzeichnet, dass** die Positionierungsmittel (608, 611) zum Positionieren der Kohärenzzone aufeinanderfolgend in Bezug auf unterschiedliche Grenzflächen des optischen Elements konfiguriert sind.

## Claims

1. Measurement method (10), for determining an item of geometric information of an interface (103) to be measured of an optical element (1000) with respect to a measurement axis (M), the optical element (1000) comprising at least two interfaces, the method (10) being implemented by a measurement device having a reference axis (R) aligned with the measurement axis (M) and comprising interferometric measurement means (6000) with at least one optical sensor (602) and at least one low-coherence light source (612), configured for directing a measurement beam (606) along the measurement axis (M) towards the optical element (1000) so as to pass through at least one of the at least two interfaces and to be reflected by the interface (103) to be measured and generate a reflected measurement beam, and for selectively detecting an interference signal resulting from interferences between the reflected measurement beam and a reference beam (616), the device further comprising positioning means (608, 611) and digital processing means,
**characterized in that** said method (10) comprises the following steps:
- relative positioning (12), by the positioning means (608, 611), of a coherence area of the light source (612) at the level of an interface (103) to be measured;
- at least a first step of measurement (14) and a second step of measurement (16) of the interface (103), by the interferometric measurement means, so as to produce one interference image per measurement step from respective interference signals;
- rotation (15) of the optical element (1000) about the reference axis (R) between the measurement steps (14, 16);
- processing (17), by the digital processing means, of the at least two interference images, so as to obtain an item of information relating to the interface (103), the processing step (17) comprising a step (18) of determining an item of decentring information of the interface (103), the decentring corresponding to an alignment error between an optical axis (O) of the interface (103) to be measured and the measurement axis (M);
- correcting the decentring of the interface by making the optical axis (O) of the interface to be measured coincident with the measurement axis (M); and
- reiterating the steps of relative positioning (12), measurement (14, 16), rotation (15), and processing (17);
the processing step (17) further comprising a step (20) of obtaining an item of geometric information of the interface to be measured by using the decentring correction.

2. Method (10) according to claim 1, **characterized in that** the processing step (17) comprises the identification of one and the same point of interest in each interference image.

3. Method (10) according to claim 1 or 2, **characterized in that** the correction step is performed by a displacement of the optical element (1000) relative to the measurement beam in a plane perpendicular to the reference axis (R).

4. Method (10) according to any one of the preceding claims, **characterized in that** the correction step is performed by a rotation of the optical element (1000) in a plane containing the reference axis (R).

5. Method (10) according to any one of the preceding claims, **characterized in that** the processing step (17) further comprises a step (19) of digital correction of the decentring of the interface.

6. Method (10) according to any one of the preceding claims, **characterized in that** the step (18) of determining an item of decentring information further comprises a propagation correction step taking into account optical propagation effects undergone by the measurement beam while passing through the interfaces of the optical element (1000).

7. Method (10) according to any one of the preceding claims, **characterized in that** at least the step (12) of positioning of the coherence area, the measurement steps (14, 16) and the at least one rotation step (15) are implemented sequentially in order to determine the item of information relating to different interfaces to be measured.

8. Method (10) according to any one of the preceding claims, **characterized in that** the interference image comprises one out of a phase image, an amplitude image and a topography image.

9. Measurement device, for determining an item of geometric information of an interface (103) to be measured of an optical element (1000) with respect to a measurement axis (M), the optical element (1000) comprising at least two interfaces, the device having a reference axis (R) aligned with the measurement axis (M) and comprising:
- interferometric measurement means (6000) comprising at least one low-coherence light source (612) and at least one optical sensor (602), configured for:
o forming at least one measurement beam (606) and at least one reference beam (616),
∘ directing the measurement beam (606) along the measurement axis (M) towards the optical element so as to pass through at least one of the at least two interfaces and to be reflected by the interface (103) to be measured and generate a reflected measurement beam,
∘ selectively detecting a plurality of interference signals resulting from interferences between the reflected measurement beam and the reference beam (616) for a plurality of measurement points on the interface (103), in order to produce an interference image;
- positioning means (608, 611) configured for relative positioning of a coherence area of the light source at the level of the interface (103) to be measured;
- angular displacement means configured for allowing a rotation of the optical element (1000) about the reference axis (R); and
- digital processing means configured for determining an item of information relating to the interface (103) from at least two interference images produced at different angular positions of the optical element (1000), the digital processing means being configured for determining an item of decentring information of the interface (103), the decentring corresponding to an alignment error between an optical axis (O) of the interface (103) to be measured and the measurement axis (M); and
- means for correcting the decentring of the interface by making the optical axis (O) of the interface to be measured coincident with the measurement axis (M);
the device being configured for reiterating the of relative positioning, the measurements, the rotation, and the processing,
the digital processing means being further configured for obtaining an item of geometric information of the interface to be measured by using the decentring correction.

10. Device according to claim 9, **characterized in that** the interferometric measurement means (6000) comprise an interferometric sensor, called full-field interferometric sensor, configured for detecting a full-field interference signal in the field of view.

11. Device according to claim 9 or 10, **characterized in that** it further comprises displacement means configured for displacing the optical element (1000) relative to the measurement beam in a plane perpendicular to the reference axis (R).

12. Device according to any one of claims 9 to 11, **characterized in that** the angular displacement means are further configured for allowing a rotation of the optical element (1000) in a plane containing the reference axis (R).

13. Device according to any one of claims 9 to 12, **characterized in that** the positioning means (608, 611) are configured for positioning the coherence area successively at the level of different interfaces of the optical element.
